(19) **Europäisches Patentamt**

**European Patent Office**

**Office européen des brevets**

(11) **EP 0 934 606 B1**

(12) **EUROPÄISCHE PATENTSCHRIFT**

(45) Veröffentlichungstag und Bekanntmachung des Hinweises auf die Patenterteilung:
**19.06.2002 Patentblatt 2002/25**

(21) Anmeldenummer: **97947718.9**

(22) Anmeldetag: **05.11.1997**

(51) Int Cl.7: **H01M 8/10**, H01M 8/02

(86) Internationale Anmeldenummer:
**PCT/DE97/02551**

(87) Internationale Veröffentlichungsnummer:
**WO 98/21777 (22.05.1998 Gazette 1998/20)**

(54) **ELEKTRODEN-ELEKTROLYT-EINHEIT FÜR EINE BRENNSTOFFZELLE**

FUEL CELL ELECTRODE-ELECTROLYTE UNIT

UNITE ELECTRODES-ELECTROLYTE POUR UNE PILE A COMBUSTIBLE

(84) Benannte Vertragsstaaten:
**CH DE FR GB LI**

(30) Priorität: **11.11.1996 DE 19646487**

(43) Veröffentlichungstag der Anmeldung:
**11.08.1999 Patentblatt 1999/32**

(73) Patentinhaber: **FORSCHUNGSZENTRUM JÜLICH GMBH**
**52425 Jülich (DE)**

(72) Erfinder:
• **DOHLE, Hendrik**
**D-52249 Eschweiler (DE)**
• **PEINECKE, Volker**
**D-73730 Esslingen (DE)**
• **BUSENBENDER, Ilona**
**D-52064 Aachen (DE)**
• **KELS, Thorsten**
**D-52428 Jülich (DE)**

(74) Vertreter: **König, Werner, Dipl.-Ing.**
**Patentanwälte König & Kollegen**
**Kackertstrasse 10**
**52072 Aachen (DE)**

(56) Entgegenhaltungen:
**WO-A-96/29752**          **DE-C- 4 241 150**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Elektroden-Elektrolyt-Einheit für eine Brennstoffzelle, bestehend aus einem protonenleitfähigen Elektrolyt, der auf einer Seite mit einer katalytisch aktiven Anode und auf der gegenüberliegenden Seite mit einer katalytisch aktiven Kathode versehen ist, und die mit einem Brennstoff arbeitet, von dem an der Anode Protonen abgespalten werden. Als Brennstoff kann z. B. Wasserstoff oder Methanol dienen. Als Elektrolyte kommen Membranen oder andere, z. B. aus Keramik bestehende Festelektrolyte oder Flüssigelektrolyte in Frage.

Brennstoffzellen sind Systeme, die chemische in elektrische Energie umwandeln. Das zentrale elektrochemische Funktionselement einer Brennstoffzelle ist die Elektroden-Elektrolyt-Einheit. Eine solche Elektroden-Elektrolyt-Einheit mit einem keramischen Feststoffelektrolyten ist z. B. aus DE 40 33 286 A1 bekannt. Weitere protonenleitfähige Feststoffelektrolyte in Form von Oxiden oder Fluoriden werden in DE 39 29 730 C2 = EP 0 417 464 A1 vorgeschlagen.

Membranbrennstoffzellen weisen eine ionenleitfähige Membran auf, die zwischen zwei katalytisch aktiven Elektroden, der Anode und der Kathode, angeordnet ist. Als Membran wird beispielsweise ein polymeres Material benutzt. Als Anodenmaterial wird bevorzugt Platin oder eine Platin-Ruthenium-Legierung, als Kathodenmaterial Platin verwendet. Das Anoden- und Kathodenmaterial wird entweder naßchemisch auf der Membran abgeschieden oder es liegt in Pulverform vor und wird mit der Membran heißverpreßt.

In der DE-PS 42 41 150 sind Verfahren beschrieben, nach denen derartige Membran-Elektroden-Einheiten hergestellt werden können.

Bei einer Brennstoffzelle, die, wie eingangs angegeben, direkt mit Methanol betrieben wird, sogenannte Direkt-Methanol-Brennstoffzellen, oder mit einem anderen Brennstoff, von dem an der Anode der Membran-Elektroden-Einheit Protonen abgespalten werden, durchdringen diese die Elektrolytschicht und reagieren auf der Kathodenseite mit dem dort zugeführten Sauerstoff unter Bildung von Wasser. Analog funktionieren Brennstoffzellen, die mit Wasserstoff betrieben werden.

Ein Nachteil der bekannten Brennstoffzellen ist, daß nicht nur die Ionen den Elektrolyt passieren können, sondern teilweise auch die Hydrathüllen der Wasserstoffionen oder ein Teil des Brennstoffs. Bei methanolbetriebenen Brennstoffzellen werden Methanolmoleküle von dem Elektrolyt durchgelassen.

Der Nachteil ist, daß das Methanol einmal die Kathode vergiftet, was zu einer verminderten Zellspannung führt, und zum anderen der oxidierbare Anteil des Methanols an der Anode vermindert wird, wodurch der Brennstoff-Ausnutzungsgrad der Brennstoffzelle reduziert wird.

Bei Wasserstoffbrennstoffzellen tritt durch die Wasserverschleppung eine Austrocknung der Anode ein, was zu einer Leistungsminderung führt. Es ist deshalb erforderlich, den Wasserstoff zusätzlich zu befeuchten.

Bisherige Lösungsansätze des Problems der Methanoldiffusion bestehen bei Direkt-Methanol-Brennstoffzellen zum Teil darin, durch eine Verbesserung der Anodenkinetik, z.B. durch eine entsprechende Aktivität der Anode, das Methanol vollständig an der Anode umzusetzen, damit sich an der Phasengrenze Anode/Elektrolyt eine niedrige Methanolkonzentration einstellt. Dadurch soll eine Reduzierung der in die Elektrolytschicht eindringenden und diese durchdringenden Methanolmenge erreicht werden. Es sind aber bislang keine Anodenstrukturen bekanntgeworden, die das Diffundieren von Methanol in allen Betriebszuständen ausreichend verhindern könnten.

Der Erfindung liegt die Aufgabe zugrunde, eine Elektroden-Elektrolyt-Einheit der eingangs genannten Art anzugeben, bei der das Durchdringen des verwendeten Brennstoffs oder das Durchdringen von Wasser durch die Elektrolytschicht verhindert wird.

Erfindungsgemäß wird die Aufgabe dadurch gelöst, daß der Elektrolyt in zwei Elektrolytschichten aufgeteilt ist, zwischen denen eine ein- oder mehrlagige Sperrschicht aus einem porenfreien oder geschlossenporigen, auf der einen Seite protonenaufnehmenden und auf der gegenüberliegenden Seite protonenabgebenden, für alle sonstigen Stoffe undurchlässigen Material angeordnet ist.

Je nach den Erfordernissen können die Elektrolytschichten gleich oder verschieden dick sein und aus dem gleichen, z. B. polymeren, oder aus verschiedenartigen Materialien hergestellt sein.

Die Sperrschicht ist insbesondere für Methanol und Wasser undurchlässig. Als geeignetes Sperrschichtmaterial hat sich eine Palladium-Silber-Legierung erwiesen.

Der Silberanteil in der Legierung beträgt bevorzugt mindestens 25 Gew.-%. Die Wasserstoffionen (Protonen) können durch diese Sperrschicht mit geringem Widerstand quasi diffundieren, indem sie auf einer Seite zu Wasserstoff rekombinieren, der die Sperrschicht dann durchdringt und auf der gegenüberliegenden Seite wieder dissoziiert wird, während andere Stoffe mit hohen Molekülgrößen, hier insbesondere Wasser und Methanol, zurückgehalten werden. Die freigesetzten Elektronen wandern zurück an die die Protonen aufnehmende Seite.

Als Sperrschicht wird bevorzugt eine Folie mit einer Dicke von 5-50 um verwendet.

Eine vorteilhafte Ausgestaltung der Erfindung besteht darin, die Sperrschicht auf beiden Seiten mit einer katalytisch aktiven, porösen Schicht mit hoher wirksamer Oberfläche zu beschichten.

Die poröse Schicht auf der der Anode zugewandten Seite hat dabei die Funktion, daß eine genügende Menge Wasserstoff gelöst wird, während die poröse Schicht auf der der Kathode zugewandten Seite bewirkt, daß die elektrochemisch wirksame Oberfläche vergrößert wird.

Diese poröse Schicht bzw. diese porösen Schichten können in an sich bekannter Weise beispielsweise durch elektrochemische Abscheidung aufgebracht werden oder sie liegen in Form eines Pulvers vor, das auf die Sperrschicht aufgebracht wird. Als Material für die poröse Schicht kommen wiederum eine Palladium-Silber-Legierung, Platin, eine Platin-Ruthenium-Legierung oder ein oder mehrere Elemente der VIII. Nebengruppe des Periodensystems oder deren Legierungen in Frage.

Das Zusammenfügen des Sperrschichtverbundes mit den weiteren Elementen der Elektroden-Elektrolyt-Einheit geschieht dann in der bereits bekannten Weise, wie sie z. B. für Membran-Elektroden-Einheiten in mehreren Varianten in der oben erwähnten Druckschrift beschrieben ist.

Eine weitere vorteilhafte Ausgestaltung der erfindunggemäßen Elektroden-Elektrolyt-Einheit, insbesondere bei Membranbrennstoffzellen und hier insbesondere für Wasserstoff-Sauerstoff-Brennstoffzellen, besteht darin, daß die Sperrschicht so dick gestaltet wird, daß sie wesentlich zur mechanischen Stabilität der Elektroden-Elektrolyt-Einheit beiträgt. Günstige Werte sind 10-50 μm. Dies erlaubt, die angrenzenden Polymerschichten sehr dünn (5-20 μm) zu halten, wodurch deren Protonenleitfähigkeit begünstigt wird. Ohne die Sperrschicht hat man insbesondere bei dünnen Polymermembranen das Problem, daß Sauerstoff von der Kathode zur Anode diffundieren kann, wodurch die Leistung der Brennstoffzelle gemindert wird.

Die Erfindung soll nachstehend anhand eines Ausführungsbeispiels einer Membranbrennstoffzelle näher erläutert werden. In den zugehörigen Zeichnungen zeigen

Fig. 1 den schematischen Aufbau einer Membranbrennstoffzelle und

Fig.2 ein Schema für die Vorgänge an und in der Sperrschicht der Membran-Elektroden-Einheit.

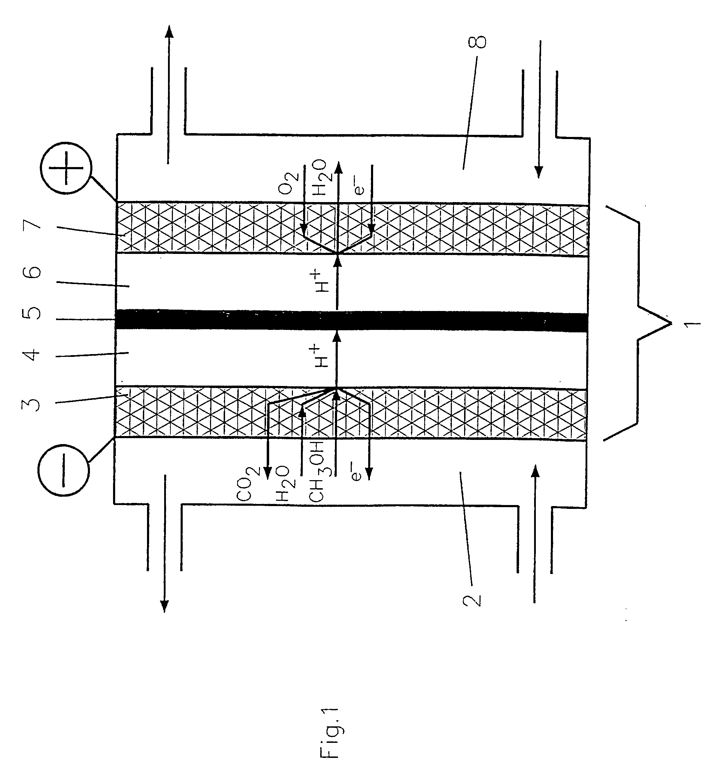

Die erfindungsgemäße Elektroden-Elektrolyt-Einheit, hier eine Membran-Elektroden-Einheit 1, wie sie in Fig. 1 gezeigt ist, grenzt an einen Anodenraum 2, zu dem ein Methanol-Wasser-Gemisch als Brennstoff zugeführt wird. Das Methanol gelangt an eine Anode 3, an der durch die Anodenreaktion

$$CH_3OH + H_2O ==> CO_2 + 6H^+ + 6e^-$$

Wasserstoffionen (Protonen), Elektronen und Kohlendioxid gebildet werden. Die Elektronen werden an der Anode durch einen hier nicht gezeigten Stromverteiler in einen äußeren (Verbraucher-)Stromkreis ab- und der Kathode zugeführt. Die Wasserstoffionen durchdringen eine anschließende Elektrolytschicht, die aus einer Polymermembran 4 besteht, wobei auch noch Methanol und Wasser mitverschleppt werden. Durch eine daran anschließende erfindungsgemäße Sperrschicht 5 aus einer Palladium-Silber-Legierung werden Methanol und Wasser zurückgehalten, während die Protonen quasi diffundieren können (siehe die oben angegebene bzw. weiter unten noch einmal näher erklärte Funktionsweise).

Auf die Sperrschicht 5 folgt eine übliche Polymermembran 6, durch die die Wasserstoffionen zu einer Kathode 7 gelangen, an der sie mit dem Sauerstoff reagieren, der der Kathode 7 im Kathodenraum 8 zugeführt wird.

Die Membran-Elektroden-Einheit 1 wird auf folgende Weise hergestellt:

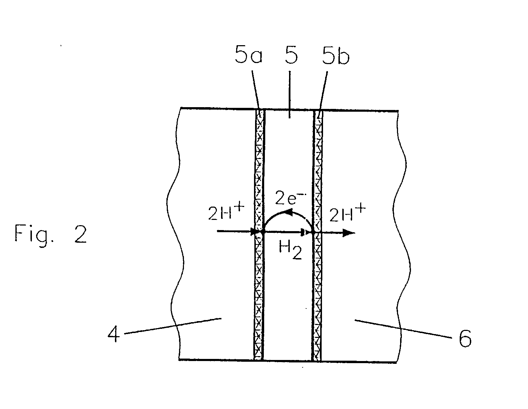

Auf eine dünne Palladium-Silber-Folie (ca. 5 μm) wird beidseitig durch elektrochemische Abscheidung eine rauhe und mikroporöse Palladium-Silber-Struktur mit einer Schichtdicke von jeweils ca. 3 μm aufgebracht. Diese porösen Schichten 5a, 5b sind in Fig. 2 beidseits der Sperrschicht 5 angedeutet. Die poröse Struktur ist erwünscht, um für die beiden erforderlichen elektrochemischen Reaktionen jeweils eine große Oberfläche zur Verfügung zu haben und einen Bereich zu schaffen, der sowohl elektronen- als auch ionenleitend ist.

Die so entstandene Zwischenschicht wird nun beidseitig mit einem ionenleitenden Polymer beschichtet. Dazu wird eine Lösung des Polymers in einer Wasser-Alkohol-Mischung mit einer Sprühpistole bei gleichmäßiger Verteilung langsam auf eine poröse Schicht aufgesprüht. Als Sprühgas kommt dabei Stickstoff zum Einsatz. Die Polymerschicht sorgt für eine intensive Anbindung des ionenleitenden Polymers an die Oberfläche der Zwischenschicht, indem sie die porösen Zwischenräume an der Oberfläche der porösen Schicht ausfüllt. Nach dem Trocknen wird die andere Seite der Zwischenschicht auf die gleiche Art und Weise behandelt.

Der so entstandene Sperrschicht-Polymer-Verbund (ca. 10-15 μm dick) wird nun nach dem Trocknen der zweiten Seite mit zwei Polymermembranen 4 und 6 mittels eines Heißpreßverfahrens zur erfindungsgemäßen Membran verbunden. Dazu wird der Verbund zwischen zwei Polymermembranen 4 und 6 (jeweils ca 50 μm dick) eingelegt und durch Anwendung von Druck und Temperatur mit diesen verpreßt. Günstige Prozeßparameter sind ein Druck von 200 bar, eine Temperatur von 130°C sowie eine Preßzeit von 10 Minuten.

Diese mit einer Sperrschicht versehene Membran kann nun in einer herkömmlichen Membran-Elektroden-Einheit Verwendung finden, indem sie auf ähnliche Weise mit einer Kathode versehen wird.

Der Wirkungsmechanismus der Sperrschicht kann folgendermaßen verstanden werden, wie nachfolgend anhand von Fig. 2 erklärt wird:

An der der Anode 3 zugewandten Seite rekombinieren die von der Anode 3 kommenden Wasserstoffionen 2H+ (Protonen) an der Oberfläche der Sperrschicht 5, insbesondere in der oberen porösen Schicht 5a, wieder zu Wasserstoff $H_2$ (Reduktion), der durch die Palladium-Silber-Folie hindurchdiffundiert. An der gegenüberliegenden Oberfläche (poröse Schicht 5b) wird er beim Austreten wieder zu Wasserstoffionen 2H+ dissoziiert (Oxidation), wobei die an der Anodenseite eingefangenen freien Elektronen des Sperrschichtverbundes wieder abgegeben werden. Die freigesetzten Elektronen 2e- wandern durch die metallische Sperrschicht 5 hindurch wieder zur Anodenseite.

Vereinfacht läßt sich die eingebrachte Zwischenschicht als elektro-chemisches Hilfssystem betrachten, bei dem zwischen einer Hilfskathode (poröse Schicht 5a - Reduktion von Wasserstoffionen) und einer Hilfsanode (poröse Schicht 5b - Oxidation von Wasserstoff) sowohl Stofftransport als auch entgegengesetzt ablaufender Elektronentransport stattfinden.

Durch dieses Prinzip wird sichergestellt, daß nur Wasserstoffionen die Brennstoffzellen-Kathode erreichen können.

**Patentansprüche**

1. Elektroden-Elektrolyt-Einheit für eine Brennstoffzelle, bestehend aus einem protonenleitfähigen Elektrolyt, der auf einer Seite mit einer katalytisch aktiven Anode (3) und auf der gegenüberliegenden Seite mit einer katalytisch aktiven Kathode (7) versehen ist, und die mit einem Brennstoff arbeitet, von dem an der Anode (3) Protonen abgespalten werden, **dadurch gekennzeichnet, daß** der Elektrolyt in zwei Elektrolytschichten (4, 6) aufgeteilt ist, zwischen denen eine ein- oder mehrlagige Sperrschicht (5) aus einem porenfreien oder geschlossenporigen, auf der einen Seite protonenaufnehmenden und auf der gegenüberliegenden Seite protonenabgebenden, für alle sonstigen Stoffe undurchlässigen Material angeordnet ist.

2. Elektroden-Elektrolyt-Einheit nach Anspruch 1, **dadurch gekennzeichnet, daß** die Sperrschicht (5) aus einer Palladium-Silber-Legierung besteht.

3. Elektroden-Elektrolyt-Einheit nach Anspruch 2, **dadurch gekennzeichnet, daß** der Silberanteil an der Legierung mindestens 25 Gew.-% beträgt.

4. Elektroden-Elektrolyt-Einheit nach einem der vorhergehenden Ansprüche, **dadurch gekennzeichnet, daß** die Sperrschicht (5) eine Folie ist.

5. Elektroden-Elektrolyt-Einheit nach Anspruch 4, **dadurch gekennzeichnet, daß** die Folie eine Dicke von 5-50 µm hat.

6. Elektroden-Elektrolyt-Einheit nach einem der vorhergehenden Ansprüche, **dadurch gekennzeichnet, daß** die Sperrschicht (5) auf beiden Seiten mit einer katalytisch aktiven, porösen Schicht (5a, 5b) mit hoher wirksamer Oberfläche beschichtet ist.

7. Elektroden-Elektrolyt-Einheit nach Anspruch 6, **dadurch gekennzeichnet, daß** die poröse Schicht (5a, 5b) durch elektrochemische Abscheidung aufgebracht ist.

8. Elektroden-Elektrolyt-Einheit nach Anspruch 6, **dadurch gekennzeichnet, daß** die poröse Schicht (5a, 5b) in Form eines auf die Sperrschicht (5) aufgebrachten Pulvers vorliegt.

9. Elektroden-Elektrolyt-Einheit nach einem der Ansprüche 6 bis 8, **dadurch gekennzeichnet, daß** die poröse Schicht (5a, 5b) eine Dicke von 1-20 µm hat.

10. Elektroden-Elektrolyt-Einheit nach einem der Ansprüche 6 bis 9, **dadurch gekennzeichnet, daß** die poröse Schicht (5a, 5b) aus einer Palladium-Silber-Legierung besteht.

11. Elektroden-Elektrolyt-Einheit nach einem der Ansprüche 6 bis 9, **dadurch gekennzeichnet, daß** die poröse Schicht (5a, 5b) aus Platin besteht.

12. Elektroden-Elektrolyt-Einheit nach einem der Ansprüche 6 bis 9, **dadurch gekennzeichnet, daß** die poröse Schicht (5a, 5b) aus einer Platin-Ruthenium-Legierung besteht.

13. Elektroden-Elektrolyt-Einheit nach einem der Ansprüche 6 bis 9, **dadurch gekennzeichnet, daß** die poröse Schicht (5a, 5b) aus einem oder mehreren Elementen der VIII. Nebengruppe des Periodensystems oder deren Legierungen besteht.

**Claims**

1. Electrode-electrolyte unit for a fuel cell, comprising a proton-conducting electrolyte which on one side is provided with a catalytically active anode (3) and on the opposite side is provided with a catalytically active cathode (7) and which operates using a fuel which is deprotonated at the anode (3), **characterized in that** the electrolyte is subdivided into two electrolyte layers (4, 6) between which a single- or multilayer barrier layer (5) is disposed which is made of a pore-free or closed-pore material which takes up protons on one side and gives up protons on the opposite side and is impermeable to all other substances.

**2.** Electrode-electrolyte unit according to Claim 1, **characterized in that** the barrier layer (5) is made of a palladium-silver alloy.

**3.** Electrode-electrolyte unit according to Claim 2, **characterized in that** the silver percentage in the alloy is at least 25 wt%.

**4.** Electrode-electrolyte unit according to any one of the preceding claims, **characterized in that** the barrier layer (5) is a foil.

**5.** Electrode-electrolyte unit according to Claim 4, **characterized in that** the foil has a thickness of 5-50 μm.

**6.** Electrode-electrolyte unit according to any one of the preceding claims, **characterized in that** the barrier layer (5) is coated on both sides with a catalytically active, porous layer (5a, 5b) having a high effective surface area.

**7.** Electrode-electrolyte unit according to Claim 6, **characterized in that** the porous layer (5a, 5b) has been applied by electrochemical deposition.

**8.** Electrode-electrolyte unit according to Claim 6, **characterized in that** the porous layer (5a, 5b) is present in the form of a powder applied to the barrier layer (5).

**9.** Electrode-electrolyte unit according to any one of Claims 6 to 8, **characterized in that** the porous layer (5a, 5b) has a thickness of 1-20 μm.

**10.** Electrode-electrolyte unit according to any one of Claims 6 to 9, **characterized in that** the porous layer (5a, 5b) is made of a palladium-silver alloy.

**11.** Electrode-electrolyte unit according to any one of Claims 6 to 9, **characterized in that** the porous layer (5a, 5b) is made of platinum.

**12.** Electrode-electrolyte unit according to any one of Claims 6 to 9, **characterized in that** the porous layer (5a, 5b) is made of a platinum-ruthenium alloy.

**13.** Electrode-electrolyte unit according to any one of Claims 6 to 9, **characterized in that** the porous layer (5a, 5b) comprises one or more elements of group VIII of the Periodic Table of the Elements or alloys of these.

**Revendications**

**1.** Unité électrodes - électrolyte pour une pile à combustibles, se composant d'un électrolyte capable de conduire les protons, qui est pourvu, d'un côté, d'une anode active par voie catalytique (3) et, du côté opposé, d'une cathode active par voie catalytique (7), et qui fonctionne à l'aide d'un combustible, duquel des protons sont arrachés à l'anode (3), **caractérisée en ce que** l'électrolyte est subdivisé en deux couches d'électrolyte (4, 6), entre lesquelles est disposée une couche barrière (5) à une ou plusieurs couches, faite d'un matériau exempt de pores ou présentant des pores fermés, absorbant d'un côté des protons et en libérant du côté opposé, tout en restant imperméable à toutes les autres substances.

**2.** Unité électrodes - électrolyte selon la revendication 1, **caractérisée en ce que** la couche barrière (5) se compose d'un alliage palladium - argent.

**3.** Unité électrodes - électrolyte selon la revendication 2, **caractérisée en ce que** la proportion d'argent dans l'alliage est d'au moins 25 % en poids.

**4.** Unité électrodes - électrolyte selon l'une quelconque des revendications précédentes, **caractérisée en ce que** la couche barrière (5) est une feuille.

**5.** Unité électrodes - électrolyte selon la revendication 4, **caractérisée en ce que** la feuille possède une épaisseur de 5-50 μm.

**6.** Unité électrodes - électrolyte selon l'une quelconque des revendications précédentes, **caractérisée en ce que** la couche barrière (5) est revêtue des deux côtés d'une couche poreuse, active par voie catalytique (5a, 5b), ayant une surface à activité élevée.

**7.** Unité électrodes - électrolyte selon la revendication 6, **caractérisée en ce que** la couche poreuse (5a, 5b) est appliquée à l'aide d'un dépôt électrochimique.

**8.** Unité électrodes - électrolyte selon la revendication 6, **caractérisée en ce que** la couche poreuse (5a, 5b) est présente sous la forme d'une poudre appliquée sur la couche barrière (5).

**9.** Unité électrodes - électrolyte selon l'une quelconque des revendications 6 à 8, **caractérisée en ce que** la couche poreuse (5a, 5b) a une épaisseur de 1-20 microns.

**10.** Unité électrodes - électrolyte selon l'une quelconque des revendications 6 à 9, **caractérisée en ce que** la couche poreuse (5a, 5b) se compose d'un alliage palladium - argent.

**11.** Unité électrodes - électrolyte selon l'une quelconque des revendications 6 à 9, **caractérisée en ce que** la couche poreuse (5a, 5b) se compose de platine.

**12.** Unité électrodes - électrolyte selon l'une quelconque des revendications 6 à 9, **caractérisée en ce que** la couche poreuse (5a, 5b) se compose d'un alliage platine - ruthénium.

**13.** Unité électrodes - électrolyte selon l'une quelconque des revendications 6 à 9, **caractérisée en ce que** la couche poreuse (5a, 5b) se compose d'un ou de plusieurs éléments du groupe secondaire VIII du système périodique ou de leurs alliages.

Fig.1

EP 0 934 606 B1

EP 0 934 606 B1

Fig. 2